# EUROPEAN PATENT APPLICATION

(11) **EP 4 831 780 A1**
(43) Date of publication of application: **28.10.2026**
(21) Application number: 24906411.4
(22) Date of filing: 18.12.2024
(51) Int. Cl.: G06F 3/04812, G06F 3/0488

(54) **MESSAGE DISPLAY METHOD AND APPARATUS, AND ELECTRONIC DEVICE AND READABLE STORAGE MEDIUM**

(30) Priority: 20.12.2023 CN 202311765532
(71) Applicant: Beijing Zitiao Network Technology Co., Ltd., Beijing 100190 (CN)
(72) Inventor: JIANG, Huimin, Beijing 100028 (CN); YANG, Qi, Beijing 100028 (CN)
(74) Representative: Isarpatent
(86) International application number: PCT/CN2024/140348
(87) International publication number: WO 2025/130932

(57) **Abstract**

The present disclosure belongs to the technical field of electronic devices. Provided are a message display method and apparatus, and an electronic device and a readable storage medium. The message display method comprises: displaying a first identifier and a first display control on a message display interface, wherein the first display control is used for displaying a first message, and the first identifier comprises first association information of a first user publishing the first message; receiving a first trigger operation on the first display control or the first identifier; and in response to the first trigger operation, displaying a content display interface, wherein the content display interface is used for displaying a first media content stream, and the first media content stream comprises the first message.

## Description

The present application claims priority to Chinese Patent Application No. 202311765532.X, filed on December 20, 2023, which is incorporated herein by reference in its entirety as a part of the present application.

### TECHNICAL FIELD

The present disclosure relates to a message display method and apparatus, an electronic device, and a readable storage medium.

### BACKGROUND

With the development of Internet communication technologies, users have an increasing need to browse messages posted by other users through instant messaging applications. In the related art, a user may only view messages posted by other users on a message display interface.

### SUMMARY

The objective of the embodiments of the present disclosure is to provide a message display method and apparatus, an electronic device, and a readable storage medium.

In a first aspect, an embodiment of the present disclosure provides a message display method, including: displaying a first identification and a first display control on a message display interface, where the first display control is configured to display a first message, and the first identification includes first association information of a first user who posts the first message; receiving a first trigger operation on the first display control or the first identification; and in response to the first trigger operation, displaying a content display interface, where the content display interface is configured to display a first media content stream, and the first media content stream includes the first message.

In a second aspect, an embodiment of the present disclosure provides a message display method, including: displaying a third identification and a third display control on a message display interface, where the third display control is configured to display a third message posted in a first media content stream; receiving a fourth trigger operation; and in response to the fourth trigger operation, displaying a first edit interface, where the first edit interface is configured to edit the third message in the first media content stream.

In a third aspect, an embodiment of the present disclosure provides a message display apparatus, including: a display module, configured to display a first identification and a first display control on a message display interface, where the first display control is configured to display a first message, and the first identification includes first association information of a first user who posts the first message; a receiving module, configured to receive a first trigger operation on the first display control or the first identification; and the display module is further configured to, in response to the first trigger operation, display a content display interface, where the content display interface is configured to display a first media content stream, and the first media content stream includes the first message.

In a fourth aspect, an embodiment of the present disclosure provides a message display apparatus, including: a display module, configured to display a third identification and a third display control on a message display interface, where the third display control is configured to display a third message posted in a first media content stream; a receiving module, configured to receive a fourth trigger operation; and the display module is further configured to, in response to the fourth trigger operation, display a first edit interface, where the first edit interface is configured to edit the third message in the first media content stream.

In a fifth aspect, an embodiment of the present disclosure provides an electronic device, including a processor, a memory, and a program or instructions stored on the memory and executable on the processor, where the program or instructions, when executed by the processor, implement the steps of the method according to the first aspect.

In a sixth aspect, an embodiment of the present disclosure provides a readable storage medium, where a program or instructions are stored on the readable storage medium, and the program or instructions, when executed by a processor, implement the steps of the message display method according to the first aspect.

In a seventh aspect, an embodiment of the present disclosure provides a chip, including a processor and a communication interface, where the communication interface is coupled with the processor, and the processor is configured to run a program or instructions to implement the steps of the message display method according to the first aspect.

In an eighth aspect, an embodiment of the present disclosure provides a computer program product, where the program product is stored in a storage medium, and the program product is executed by at least one processor to implement the message display method according to the first aspect.

### BRIEF DESCRIPTION OF DRAWINGS

Fig. 1 shows a first flow schematic diagram of a message display method provided by an embodiment of the present disclosure;
Fig. 2 shows a first schematic diagram of a message display interface provided by some embodiments of the present disclosure;
Fig. 3 shows a first schematic diagram of a content display interface provided by some embodiments of the present disclosure;
Fig. 4 shows a schematic diagram of a content display interface and a target chat interface provided by some embodiments of the present disclosure;
Fig. 5 shows a second schematic diagram of a message display interface provided by some embodiments of the present disclosure;
Fig. 6 shows a third schematic diagram of a message display interface provided by some embodiments of the present disclosure;
Fig. 7 shows a fourth schematic diagram of a message display interface provided by some embodiments of the present disclosure;
Fig. 8 shows a schematic diagram of a message display interface and a content display interface provided by some embodiments of the present disclosure;
Fig. 9 shows a second flow schematic diagram of a message display method provided by an embodiment of the present disclosure;
Fig. 10 shows a fifth schematic diagram of a message display interface provided by some embodiments of the present disclosure;
Fig. 11 shows a schematic diagram of a message display interface and a first edit interface provided by some embodiments of the present disclosure;
Fig. 12 shows a schematic diagram of a message display interface, a first edit interface, and a second edit interface provided by some embodiments of the present disclosure;
Fig. 13 shows a schematic diagram of a content display interface and a message edit interface provided by some embodiments of the present disclosure;
Fig. 14 shows a second schematic diagram of a content display interface provided by some embodiments of the present disclosure;
Fig. 15 shows a first structural block diagram of a message display apparatus provided by an embodiment of the present disclosure;
Fig. 16 shows a second structural block diagram of a message display apparatus provided by an embodiment of the present disclosure;
Fig. 17 shows a structural block diagram of an electronic device provided by some embodiments of the present disclosure; and
Fig. 18 shows a schematic diagram of a hardware structure for implementing an electronic device provided by some embodiments of the present disclosure.

### DETAILED DESCRIPTION OF EMBODIMENTS

The technical solutions in the embodiments of the present disclosure will be clearly described below with reference to the drawings in the embodiments of the present disclosure. Apparently, the described embodiments are some rather than all of the embodiments of the present disclosure. All other embodiments obtained by a person of ordinary skill in the art based on the embodiments of the present disclosure shall fall within the protection scope of the present disclosure.

In the specification and claims of the present disclosure, the terms "first", "second", and the like are intended to distinguish between similar objects but do not necessarily indicate a specific order or sequence. It should be understood that the terms so used are interchangeable under appropriate circumstances so that the embodiments of the present disclosure described herein may be implemented in orders except the order illustrated or described herein. Moreover, the objects distinguished by the terms "first", "second", and the like are generally of one kind, and the terms do not limit the number of objects. For example, there may be one or more first objects. In addition, "and/or" in the specification and claims represents at least one of the connected objects, and the character "/" generally indicates an "or" relationship between the associated objects.

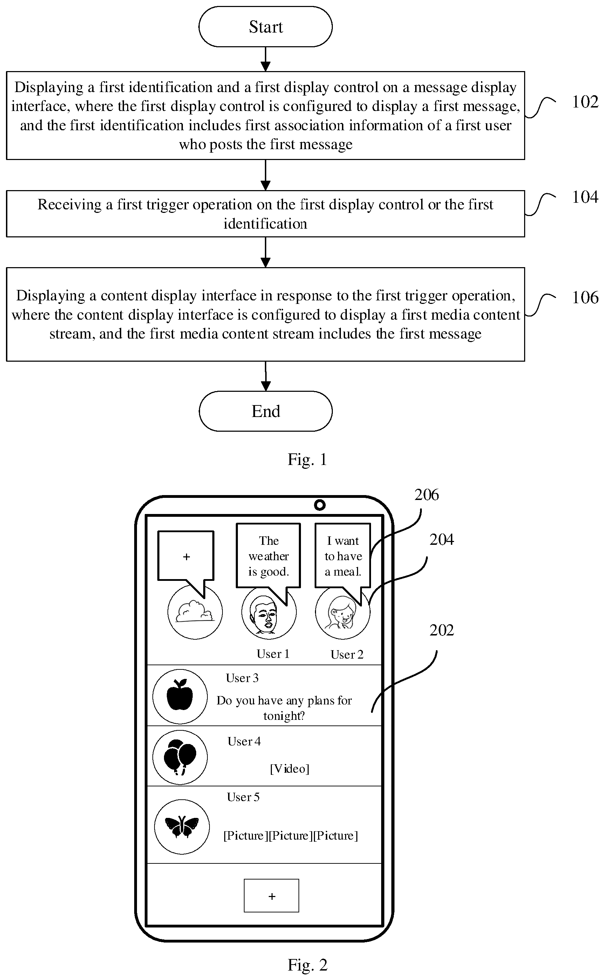

The message display method, the message display apparatus, the electronic device, and the readable storage medium provided by the embodiments of the present disclosure are described in detail below with reference to FIGS. 1 to 18 through specific embodiments and application scenarios thereof.

At least one embodiment of the present disclosure provides a message display method. Fig. 1 shows a first flow schematic diagram of a message display method provided by an embodiment of the present disclosure. As shown in Fig. 1, the message display method includes the following steps.

Step 102: displaying a first identification and a first display control on a message display interface, where the first display control is configured to display a first message, and the first identification includes first association information of a first user who posts the first message.

In this embodiment of the present disclosure, the message display interface is configured to display received messages. The first user is a user who posts the first message. The first identification and the corresponding first display control are displayed on the message display interface. The first identification includes the first association information of the first user. The first display control is configured to display the first message. The first message is a broadcast message, a talk message, or the like posted by the first user.

It should be noted that there may be a plurality of first identifications. The number of first display controls is less than or equal to the number of first identifications. Each first display control corresponds to one first identification. The first display control may be displayed at an associated position of the first identification, for example, in a preset range from a center of the first identification or in an overlapping area with the first identification.

Exemplarily, the first message may include text information, image information, emoticon information, and the like.

Exemplarily, the first association information includes an avatar of the first user, a name of the first user, and the like. Identification information of the first user may be determined based on the first association information.

Step 104: receiving a first trigger operation on the first display control or the first identification.

It should be noted that the first trigger operation may be a gesture operation such as a single-click operation, a double-click operation, or a long press operation, which is not specifically limited herein.

Step 106: displaying a content display interface in response to the first trigger operation, where the content display interface is configured to display a first media content stream, and the first media content stream includes the first message.

In this embodiment of the present disclosure, after the first trigger operation is performed on the first display control or the first identification, the content display interface is displayed, and the first message is displayed on the content display interface. The content display interface is configured to display the first media content stream corresponding to the first message. When there are a plurality of first users, the first media content stream includes a plurality of first messages sent by the plurality of first users.

Exemplarily, there are a plurality of first users, and a plurality of first identifications corresponding to the plurality of first users are displayed on the message display interface. When the plurality of first users all send the first messages, the corresponding first message is displayed in the first display control corresponding to each first identification. When a first user does not send the first message, the first display control corresponding to the first user displays blank content.

Fig. 2 shows a first schematic diagram of a message display interface provided by some embodiments of the present disclosure. As shown in Fig. 2, a message list 202, a first identification 204, and a first display control 206 are displayed on the message display interface. The first identification 204 is displayed above the message list 202. The first display control 206 may be in a bubble style. The first display control 206 is displayed near the corresponding first identification 204. The user clicks on the first display control 206 to trigger the display of the content display interface, and the first message is displayed on the content display interface.

In this embodiment of the present disclosure, the first message sent by the first user may be displayed on the message display interface through the first identification and the corresponding first display control. The user may perform the first trigger operation on the first identification or the first display control to jump to display the content display interface corresponding to the first media content stream. The first message in the first media content stream may be displayed on the content display interface, so that the first message may be displayed not only on the message display interface, but also in the first media content stream on the content display interface, thereby improving the display effect of the first message.

In some embodiments of the present disclosure, displaying the content display interface in response to the first trigger operation includes: displaying the first message on the content display interface; receiving a second trigger operation on the content display interface; and displaying first media content in response to the second trigger operation, where the first media content is media content other than the first message in the first media content stream.

In this embodiment of the present disclosure, the content display interface is configured to display the first media content stream. When the content display interface is displayed in response to the first trigger operation, the first message in the first media content stream is displayed on the content display interface. The second trigger operation is used to trigger an update of the media content displayed on the content display interface. Since the content display interface is configured to display the first media content stream, and the first media content stream includes not only the first message but also other media content, in the case where the second trigger operation is received, the media content in the first media content stream is switched and displayed. It should be noted that the first media content is media content adjacent to the media content including the first message currently displayed in the first media content stream.

Exemplarily, the first media content stream includes a plurality of first messages sent by a plurality of first users. The second trigger operation is a swipe input operation. Through the swipe input operation, other first messages adjacent to the first message currently displayed in the first media content stream may be switched and displayed. That is, the first media content may be other first messages.

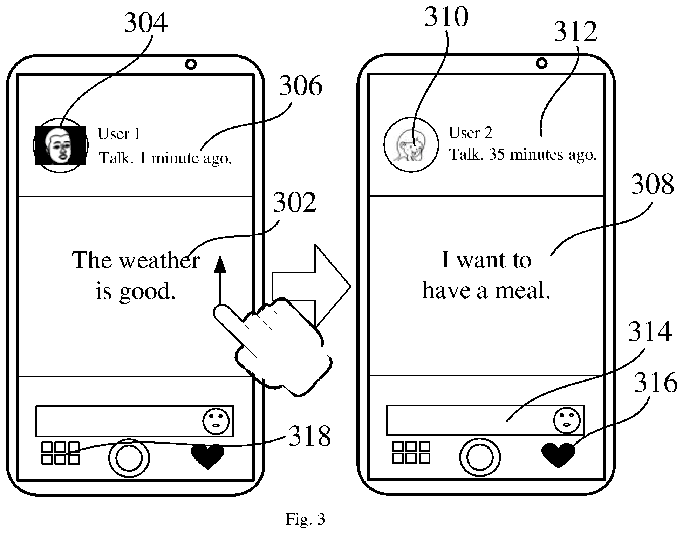

Fig. 3 shows a first schematic diagram of a content display interface provided by some embodiments of the present disclosure. As shown in Fig. 3, first text content 302, and a first avatar icon 304 and first time information 306 corresponding to the first text content 302 are displayed on the content display interface. The user performs an upward swipe operation on the content display interface, and second text content 308, and a second avatar icon 310 and second time information 312 corresponding to the second text content 308 are displayed on the content display interface. The upward swipe operation is the second trigger operation. The first text content 302 is the first message displayed before the second trigger operation is performed. The second text content 308 is the first message displayed after the second trigger operation is performed.

In this embodiment of the present disclosure, the first message may be displayed on the media content interface, and the user may perform the second trigger operation on the media content interface to trigger other media content in the first media content stream, so that the user may switch to view other media content in the first media content stream during the process of viewing the first message on the media content interface.

In some embodiments of the present disclosure, displaying the content display interface in response to the first trigger operation includes: displaying the first association information and first time information on the content display interface, where the first time information is associated with a posting moment of the first message.

In this embodiment of the present disclosure, the first association information includes user identification information of the first user, for example, information such as a user avatar and a user name. The first time information is used to display the posting moment of the first message. For example, the first time information includes information about the posting moment or time information between a current moment and the posting moment.

As shown in Fig. 3, the first avatar icon 304 is the first association information, and the first time information 306 is displayed below a user avatar picture.

In this embodiment of the present disclosure, by displaying the first association information and the first time information on the content display interface, the user may view the user association information of the first user who sends the first message and the sending time information of the first message on the content display interface, so that the user may fully understand the information related to the first message.

In some embodiments of the present disclosure, displaying the first media content includes: updating the first association information to third association information, and updating the first time information to second time information, where the third association information is association information of a second user who posts the first media content, and the second time information is associated with a posting moment of the first media content.

In this embodiment of the present disclosure, the media content in the first media content stream includes not only the first message, but also the first association information and the first time information corresponding to the first message. When the user performs the second trigger operation, the content display interface updates to display the first media content. The first media content includes other message-type content or other types of content. The second time information and the third association information are determined based on the content updated and displayed. The second time information and the third association information are association information and time information corresponding to the other message-type content or the other types of content.

As shown in Fig. 3, the first text content 302 is the first message displayed before the user performs the second trigger operation, and the second text content 308 is the first message displayed after the user performs the second trigger operation. The first time information 306 is time information for posting the first text content 302. The first avatar icon 304 is an avatar icon of the user who posts the first text content 302. The second time information 312 is time information for posting the second text content 308. The second avatar icon 310 is an avatar icon of the user who posts the first text content 308.

In this embodiment of the present disclosure, the first time information of the first message and the first association information of the first user who posts the first message that are displayed when the first message is displayed on the content display interface. After the user performs the second trigger operation to cause the content display interface to display the updated first media content, the first association information and the first time information on the content display interface are updated to the third association information and the second time information corresponding to the first media content, respectively, thereby realizing timely updating of the information related to the content display interface.

In some embodiments of the present disclosure, in response to the first trigger operation, displaying the content display interface includes: displaying a first input control on the content display interface, where the first input control is configured to trigger sending of a second message, and the second message is associated with the first message.

In this embodiment of the present disclosure, the first input control is configured to trigger sending of the second message to the first user, that is, the corresponding second message may be replied to the first message through the first input control. Exemplarily, the second message is sent to the first user in the form of an instant messaging message, a notification message, or a comment message.

Exemplarily, the first input control includes an input box, a virtual keyboard, and a sending button. The user may use the virtual keyboard to edit the second message to be replied to in the input box, and then click on the sending button to send the edited second message.

Exemplarily, the first input control includes a like button, and the user may click on the like button to send like information to the first user as the second message.

As shown in Fig. 3, the input box 314 and a like button 316 are further displayed below the first text content. The virtual keyboard is invoked by clicking on the input box 314, so that the message is edited in the input box 314, and the edited message is sent as the second message. The like message may be directly sent by clicking on the like button 316. The input box 314 and the like button 316 are the first input control on the content display interface.

As shown in Fig. 3, an aggregate interface control 318 is further displayed on the content display interface. The user may click on the aggregate interface control 318 to jump to an aggregate interface. A plurality of pieces of media content in the first media content stream, for example, thumbnails of the plurality of pieces of media content, may be displayed on the aggregate interface.

In this implementation of the present disclosure, the first input control is further displayed on the content display interface, and the second message may be conveniently triggered to reply to the first message through the first input control, thereby facilitating message reply when the user browses the first media content stream.

In some embodiments of the present disclosure, the second message is sent to the first user through a target chat interface.

In this embodiment of the present disclosure, the target chat interface is an instant messaging interface with the first user, and the second message is an instant messaging message transmitted through the target chat interface.

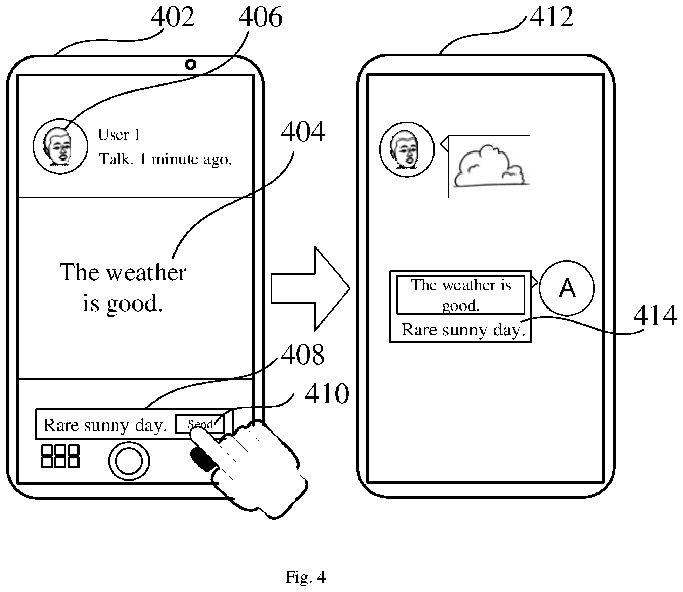

Fig. 4 shows a schematic diagram of a content display interface and a target chat interface provided by some embodiments of the present disclosure. As shown in Fig. 4, a first message 404, a user avatar icon 406, an input box 408, a sending button 410, and a like button are displayed on the content display interface 402. After the user edits a second message 414 in the input box and clicks on the sending button 410, the second message 414 is sent to the target chat interface 412 between the current user and user 1. The user avatar icon 406 and the second message 414 sent to the user are displayed on the target chat interface. Exemplarily, when the second message 414 is sent to the target chat, the second message 414 may be displayed on the target chat interface in a style of quoting the first message.

In this embodiment of the present disclosure, the second message is sent to the first user as the instant messaging message, thereby realizing that the instant chat interface with the first user may be conveniently switched to for an instant chat when browsing is performed on the content display interface.

In some embodiments of the present disclosure, the message display method further includes: receiving a third trigger operation on the first identification or the first display control; and in response to the third trigger operation, displaying a first target interface on the message display interface, where the first target interface includes a second input control, and the second input control is configured to trigger sending of a second message, and the second message is associated with the first message.

In this embodiment of the present disclosure, the third trigger operation is used to trigger the display of the first target interface on the message display interface. The second input control for sending the second message is displayed on the first target interface. The second message may be sent to the first user through the second input control. Since the first target interface is displayed on the message display interface, the user may conveniently reply to the first message without jumping to other interfaces.

It should be noted that the third trigger operation may be a trigger operation on the first identification or the first display control. For example, the third trigger operation may be a click on the first identification, or the third trigger operation may be a long press on the first display control.

Exemplarily, the first target interface may be a target chat pop-up window, and the target chat pop-up window is a pop-up window for chatting with the first user.

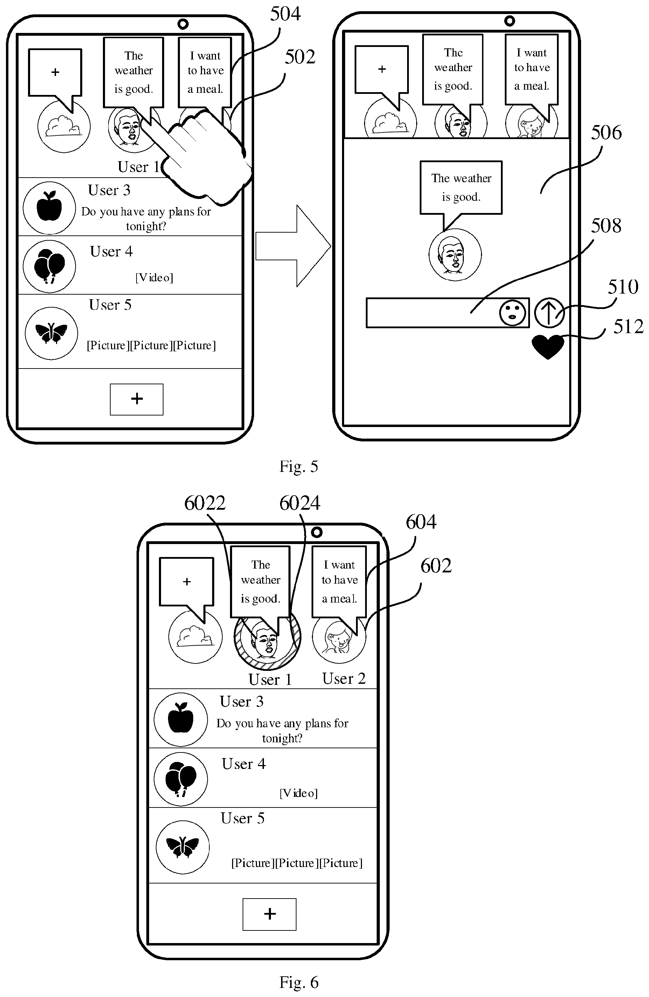

Fig. 5 shows a second schematic diagram of a message display interface provided by some embodiments of the present disclosure. As shown in Fig. 5, a first identification 502 and a first display control 504 are displayed on the message display interface. When the user clicks on the first identification 502 or long presses the first display control 504, a target chat pop-up window 506 is popped up at the bottom of the message display interface. An input box 508, a sending button 510, and a like button 512 are displayed in the target chat pop-up window 506. The second message to be sent may be edited through the input box 508, and the edited second message may be sent to the first user by clicking on the sending button 510. By clicking on the like button 512, the like message is sent to the first user as the second message. After the second message is sent to the first user, the target chat pop-up window 506 may be hidden. The target chat pop-up window 506 is the first target interface, and the input box 508, the sending button 510, and the like button 512 serve as the second input control.

In this embodiment of the present disclosure, the first target interface including the second input control is displayed on the content display interface, so that the user may reply to the first message displayed through the second input control, and the operation steps required for the user to reply to the message are further reduced.

In some embodiments of the present disclosure, the first identification includes a first status identification; and in a case where the first message is read or the second message associated with the first message is sent, the first status identification in the first identification is updated.

In this embodiment of the present disclosure, the first status identification is used to display a processing status of the first message sent by the first user. Exemplarily, after the current user has browsed the first message, the first message is determined to be read, and the first status identification is updated; or when the second message is sent to the first user, the first message is determined to have been replied to, that is, the processing status of the first message has changed, and the first status identification is updated accordingly.

Exemplarily, the first status identification may be an identification with a fixed shape and style, and as the processing status of the first message changes, the color of the first status identification changes, thereby prompting the user of the processing status of the first message. For example, the first status identification is a color ring displayed around the avatar icon. When the first message is in an unprocessed status, the color of the color ring is red, and when the first message is in a processed status, the color of the color ring is green.

Exemplarily, the first status identification may be an identification with a fixed color, and as the processing status of the first message changes, the style of the first status identification changes.

Fig. 6 shows a third schematic diagram of a message display interface provided by some embodiments of the present disclosure. As shown in Fig. 6, a first identification 602 and a first display control 604 are displayed on the message display interface. The first identification 602 includes a user avatar icon 6022 displayed in the identification content and a color ring identification 6024 displayed around the user avatar icon 6022. As the processing status of the first message in the first display control 604 changes, the display color of the color ring identification 6024 changes. The user avatar icon 6022 is the first association information, and the color ring identification 6024 is the first status identification.

In this embodiment of the present disclosure, the first status identification is displayed in the first identification, so that the user may view the first status identification to determine the processing status of the first message, and the first status identification is updated in time after the second message associated with the first message is sent, thereby facilitating the user to know the processing status of the first message in real time.

In some embodiments of the present disclosure, the message display method further includes: hiding the first display control when a display duration of the first display control reaches a duration threshold.

In this embodiment of the present disclosure, the duration threshold is a preset longest duration that the same first message displayed in the first display control may be displayed. After the display duration of the first display control reaches the duration threshold, it is determined that the first message has expired, and the first display control is hidden, that is, the first message is no longer displayed.

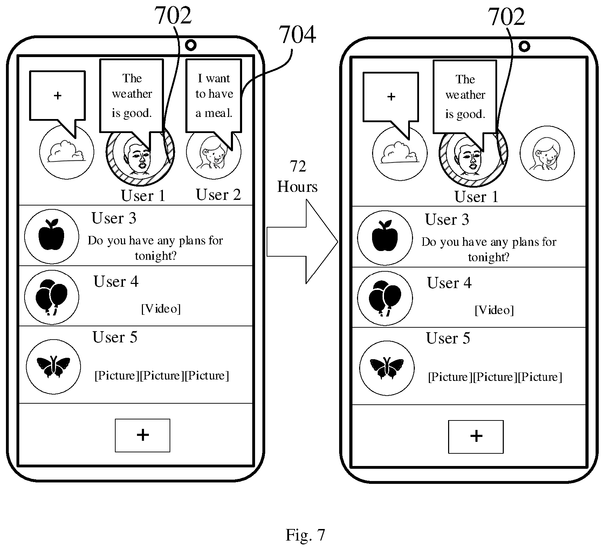

Fig. 7 shows a fourth schematic diagram of a message display interface provided by some embodiments of the present disclosure. As shown in Fig. 7, two first identifications 702 and two first display controls 704 are displayed on the message display interface. After the duration of the first message displayed in the first display control 704 corresponding to the first identification 702 in the second place reaches 72 hours, the display of the first display control 704 is cancelled.

It should be noted that in the case where the content display interface includes a plurality of first display controls, the display duration of the first message in each of the plurality of first display controls is separately counted.

In this embodiment of the present disclosure, the display duration of the first display control is timed, and in the case where the display duration reaches the duration threshold, the display of the first display control is cancelled, thereby avoiding displaying an expired first message for a long time, and making the content display interface more concise.

In some embodiments of the present disclosure, a second identification and a second display control are displayed on the content display interface, and the second display control is configured to display the first message; and a display style of the second identification and the second display control matches a display style of the first identification and the first display control.

In this embodiment of the present disclosure, the second identification and the second display control are displayed on the content display interface. The display style of the second identification is the same as the display style of the first identification, and the display style of the second display control is the same as the display style of the first display control.

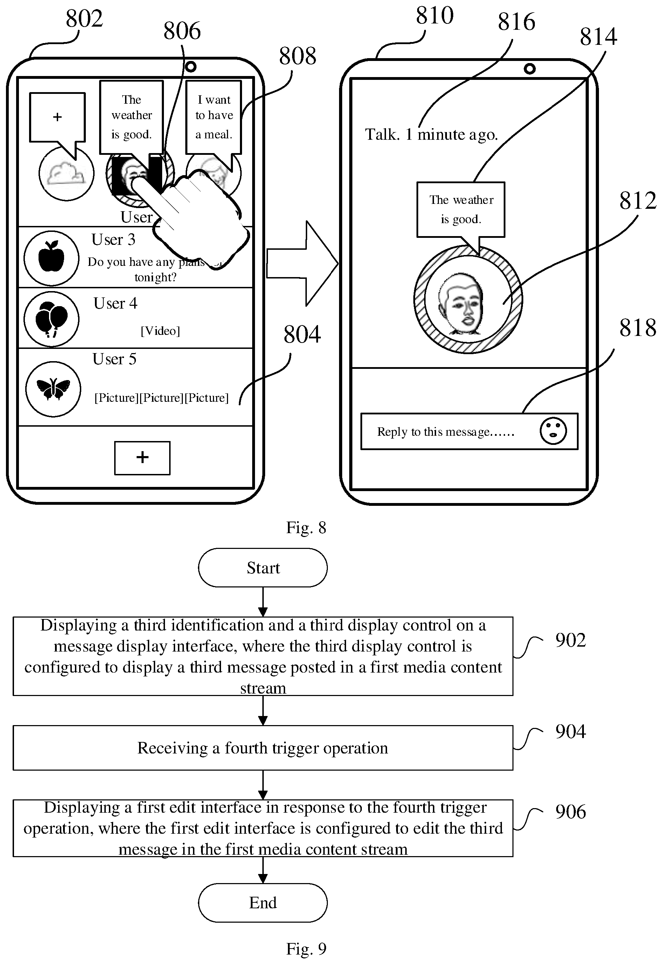

Fig. 8 shows a schematic diagram of a message display interface and a content display interface provided by some embodiments of the present disclosure. As shown in Fig. 8, a message list 804, a first identification 806, and a first display control 808 are displayed on the message display interface 802. The user clicks on the first identification 806 to trigger the jump to display the content display interface 810. A second identification 812, a second display control 814, time information 816, and a reply button 818 are displayed on the content display interface 810. The identification style of the first identification 806 is the same as the identification style of the second identification 812. The control style of the first display control 808 is the same as the control style of the second display control 814, for example, both are bubble styles. The first message in the first display control 808 and the first message in the second display control 814 are also the same.

In this embodiment of the present disclosure, since the first association information and the first message of the first user need to be displayed on the content display interface, the display style of the second identification and the second display control displayed on the content display interface is set to be the same as the display style of the first identification and the second display control displayed on the message display interface, thereby improving the display effect of the first message.

In some embodiments of the present disclosure, a background color of the content display interface matches an identification color of the first identification.

In this embodiment of the present disclosure, the background color of the content display interface matches the identification color of the first identification. After the content display interface is displayed by jumping, color sampling is performed on the first identification by a color sampling algorithm, and the background color of the content display interface is set based on a color sampling result.

Exemplarily, the first identification includes an avatar icon of the first user, color sampling is performed on the avatar icon by the color sampling algorithm, and the background color of the content display interface is set based on the color sampling result. Alternatively, the avatar icon of the first user is blurred, and the blurred avatar icon is used as a background image of the content display interface.

In this embodiment of the present disclosure, the background color of the content display interface is configured according to the identification color of the first identification, so that the background color matches the identification color, the distinguishability of the first messages posted by different first users when viewed on the content display interface is improved, and it is convenient for the user to distinguish the first messages from different sources.

At least one embodiment of the present disclosure provides a message display method. Fig. 9 shows a second flow schematic diagram of a message display method provided by an embodiment of the present disclosure. As shown in Fig. 9, the message display method includes the following steps.

Step 902: displaying a third identification and a third display control on a message display interface, where the third display control is configured to display a third message posted in a first media content stream.

In this embodiment of the present disclosure, the third message is a talk message or a broadcast message posted by a local user. The third identification includes third association information of the local user. The third display control is configured to display the third message sent by the local user.

Step 904: receiving a fourth trigger operation.

It should be noted that the first trigger operation may be a gesture operation such as a single-click operation, a double-click operation, or a long press operation, which is not specifically limited herein.

Step 906: displaying a first edit interface in response to the fourth trigger operation, where the first edit interface is configured to edit the third message in the first media content stream.

In this embodiment of the present disclosure, the first edit interface is an interface for editing the third message posted by the local end, that is, the local user may edit the third message to be posted in the first edit interface. It should be noted that the third message and the first message are both information in the first media content stream.

Exemplarily, on the message display interface, the display position of the first identification is adjacent to the display position of the third identification, and the control style of the first display control is the same as the control style of the third display control. For example, the first identification and the third identification are both displayed at the top of the message display interface, the first display control is displayed at a corresponding position of the first identification, and the third display control is displayed at a corresponding position of the third identification.

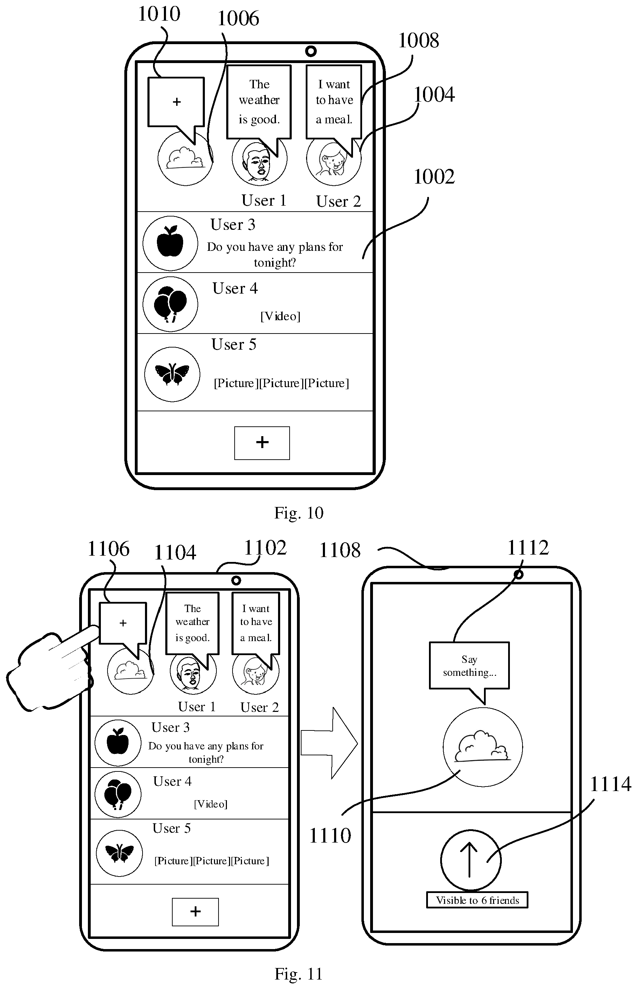

Fig. 10 shows a fifth schematic diagram of a message display interface provided by some embodiments of the present disclosure. As shown in Fig. 10, a message list 1002, a first identification 1004, a third identification 1006, a first display control 1008, and a third display control 1010 are displayed on the message display interface. The first identification 1004 and the third identification 1006 are displayed above the message list 1002. The first display control 1008 and the third display control 1010 may be in a bubble style. The first display control 1008 is displayed near the corresponding first identification 1004, and the third display control is displayed near the corresponding third identification.

In this embodiment of the present disclosure, the third identification and the third display control are displayed on the message display interface, so that the local user may view the third message posted by the local end on the message display interface, and may perform the fourth trigger operation on the message display interface to jump to the first edit interface, thereby further simplifying the operation steps required for the user to edit the third message to be posted.

In some embodiments of the present disclosure, receiving the fourth trigger operation includes: receiving the fourth trigger operation on the third identification or the third display control.

In this embodiment of the present disclosure, the fourth trigger operation may be a touch input to the third identification or the third display control. Exemplarily, the fourth trigger operation may be a click on the third display control, or the fourth trigger operation may be a long press on the third identification.

It should be noted that in the case where the third message is not displayed in the third display control, a posting prompt identification is displayed in the third display control, and the user may directly jump to the first edit interface by clicking on the third display control.

Fig. 11 shows a schematic diagram of a message display interface and a first edit interface provided by some embodiments of the present disclosure. As shown in Fig. 11, a third identification 1104 and a third display control 1106 are displayed on the message display interface 1102, and a "+" identification is displayed in the third display control 1106. The user may click on the third display control 1106 to display the first edit interface 1108. A fourth identification 1110 and a third input control 1112 are displayed on the first edit interface 1108. The virtual keyboard may be invoked by clicking on the third input control 1112, thereby editing the third message on the first edit interface 1108.

In this embodiment of the present disclosure, the user may perform the fourth trigger operation on the third identification or the third display control to trigger the display of the first edit interface, so that the user may quickly jump from the message display interface to the first edit interface, thereby improving the convenience for the user to edit the third message.

In some embodiments of the present disclosure, receiving the fourth trigger operation includes: receiving a first sub-trigger operation on the third identification; in response to the first sub-trigger operation, displaying a second edit interface, where the second edit interface includes a switching control, and the second edit interface is configured to edit media content in a second media content stream; and receiving a second sub-trigger operation on the switching control; and in response to the fourth trigger operation, displaying the first edit interface includes: in response to the second sub-trigger operation, displaying the first edit interface.

In this embodiment of the present disclosure, the fourth trigger operation includes the first sub-trigger operation and the second sub-trigger operation. The first sub-trigger operation is used to trigger a jump from the media display interface to the second edit interface. The second edit interface is configured to edit the media content in the second media content stream. The second media content stream is a different media content stream from the first media content stream.

Exemplarily, the media content in the first media content stream includes the third message posted by the local user and the first message posted by the first user. The media content in the second media content stream may be other content such as image content, video content, and text content.

In this embodiment of the present disclosure, the first edit interface and the second edit interface may be switched between by the switching control. The second sub-trigger operation is used to jump from the second edit interface to the first edit interface by triggering the switching control.

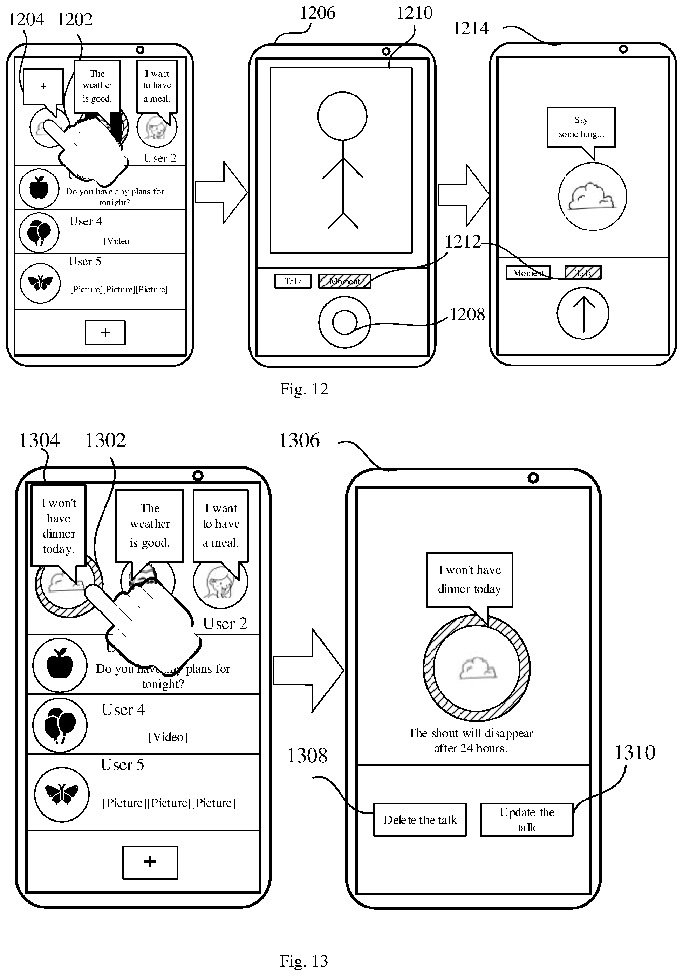

Fig. 12 shows a schematic diagram of a message display interface, a first edit interface, and a second edit interface provided by some embodiments of the present disclosure. As shown in Fig. 12, a third identification 1202 and a third display control 1204 are displayed on the message display interface, and a "+" identification is displayed in the third display control. The user may click on the third identification 1202 to display the second edit interface 1206. A shooting button 1208, a shooting preview window 1210, and a switching control 1212 are displayed on the second edit interface 1206. The user swipes the switching control 1212 left or right to switch to display the first edit interface 1214. The switching control 1212 is also displayed on the first edit interface, and the second edit interface may also be switched to by the switching control 1212.

In this embodiment of the present disclosure, the user may display the second edit interface for editing the second media content stream through the first sub-trigger operation. In this case, the second sub-trigger operation may trigger the jump from the second edit interface to the first edit interface. The user may enter the second edit interface through the message display interface to edit the media content in the second media content stream, and may also jump from the second edit interface to display the first edit interface through the switching control, thereby further improving the operation convenience for the user to enter the edit interfaces of different media content streams from the message display interface.

In some embodiments of the present disclosure, the method further includes: a switching control is displayed on the first edit interface, and the switching control is configured to trigger switching to display the second edit interface.

In this embodiment of the present disclosure, the switching control is displayed on the first edit interface. The user may trigger switching to display the second edit interface on the first edit interface, so that the user may edit the media content in the second media content stream on the second edit interface.

It should be noted that there may be a plurality of second edit interfaces, and the plurality of second edit interfaces are used to edit media content in a plurality of different second media content streams.

As shown in Fig. 12, the switching control 1212 includes a plurality of tabs, different tabs correspond to different second edit interfaces 1206, and different types of media content may be edited on the different second edit interfaces 1206.

In this embodiment of the present disclosure, the switching control is displayed on the first edit interface. The user may perform a trigger operation on the switching control to switch from the first edit interface to the second edit interface for editing the second media content stream, thereby further simplifying the operation steps for the user to edit the second media content stream.

In some embodiments of the present disclosure, in response to the fourth trigger operation, displaying the first edit interface includes: displaying a fourth identification and a third input control on the first edit interface, where the third input control is configured to trigger editing of the third message in the first media content stream; and a display style of the fourth identification and the third input control matches a display style of the third identification and the third display control.

In this embodiment of the present disclosure, the fourth identification and the third input control are displayed on the first edit interface. The display style of the fourth identification is the same as the display style of the third identification, and the display style of the third input control is the same as the display style of the third display control.

As shown in Fig. 11, the identification style of the third identification 1104 is the same as the identification style of the fourth identification 1110, and the third identification 1104 and the fourth identification 1110 both include the avatar icon of the local user. The control style of the third display control 1106 is the same as the control style of the third input control 1112, for example, both are in the bubble style.

Exemplarily, a posting control 1114 is further displayed on the first edit interface 1108, and in the case where the third message is not input in the input box, the posting control 1114 is grayed out or hidden. In the case where the third message has been input in the input box, the posting control 1114 is in a to-be-triggered state, and at this time, the posting control 1114 may be triggered to post the third message displayed in the input box.

In this embodiment of the present disclosure, since the third association information of the local user and the third message need to be displayed on the first edit interface, the fourth identification and the third input control displayed on the first edit interface are set to be the same as the third identification and the third display control displayed on the message display interface in style, so that the effect of what you see is what you get for the user is achieved, that is, the current posting user may know the display style of the third message on the message display page on the edit page.

In some embodiments of the present disclosure, a background color of the first edit interface matches an identification color of the fourth identification.

In this embodiment of the present disclosure, the background color of the first edit interface matches the identification color of the fourth identification. After the first edit interface is displayed by jumping, color sampling is performed on the fourth identification by a color sampling algorithm, and the background color of the first edit interface is set based on a color sampling result.

Exemplarily, the fourth identification includes the avatar icon of the local user, color sampling is performed on the avatar icon by the color sampling algorithm, and the background color of the first edit interface is set based on the color sampling result. Alternatively, the avatar icon of the local user is blurred, and the blurred avatar icon is used as a background image of the first edit interface.

In this embodiment of the present disclosure, the background color of the first edit interface is configured according to the identification color of the fourth identification, so that the background color matches the identification color, the distinguishability of the first messages posted by different local users when viewed on the first edit interface is improved, and it is convenient for the user to distinguish the first messages from different sources.

In some embodiments of the present disclosure, after displaying the third identification and the third display control on the message display interface, the method further includes: receiving a fifth trigger operation on the third identification; and in response to the fifth trigger operation, displaying a second target interface on the message display interface, where the second target interface includes a deletion control and an update control, the deletion control is configured to delete the third message, and the update control is configured to update the third message.

In this embodiment of the present disclosure, the fifth trigger operation is used to trigger the display of the second target interface on the message display interface. The deletion control for deleting the third message and the update control for updating the third message are displayed on the second target interface. The posted third message may be deleted through the deletion control, and the posted third message may be updated through the update control. The user may conveniently delete or update the third message through the message display interface.

It should be noted that the fifth trigger operation may be a trigger operation on the third identification or the third display control. For example, the fifth trigger operation may be a click on the third identification, or the fifth trigger operation may be a long press on the third display control.

Exemplarily, the second target interface may be a message edit interface.

Fig. 13 shows a schematic diagram of a content display interface and a message edit interface provided by some embodiments of the present disclosure. As shown in Fig. 13, a third identification 1302 and a third display control 1304 are displayed on the message display interface, and the third message is displayed in the third display control 1304. When the user clicks on the third identification 1302, the message edit interface 1306 is displayed, and the deletion control 1308 and the update control 1310 are displayed in the message edit interface 1306. The posted third message may be edited through the update control 1310. The posted third message may be conveniently deleted by clicking on the deletion control 1308. The message edit interface 1306 is the second target interface.

In this embodiment of the present disclosure, the second target interface including the update control and the deletion control is displayed on the message display interface, so that the user may conveniently delete or update the posted third message through the deletion control and the update control, and the operation steps required for the user to perform deletion or update processing on the posted third message are further reduced.

In some embodiments of the present disclosure, the message display method further includes: receiving a sixth trigger operation on the content display interface; and in response to the sixth trigger operation, displaying a third target interface on the content display interface, where the third target interface includes second association information and/or a fourth input control, the second association information is association information of a third user who browses the third message, and the fourth input control is configured to send a fourth message to the third user.

In this embodiment of the present disclosure, the sixth trigger operation is used to trigger the display of the third target interface on the content display interface, and the third target interface is used to display the second association information of the third user who has browsed the third message.

Exemplarily, the second association information includes a user avatar icon, a user name, etc. of the third user.

In this embodiment of the present disclosure, the fourth input control is further displayed on the third target interface. By triggering a trigger operation on the fourth input control, the fourth message may be triggered to be sent to the third user. The fourth message may be a greeting message, a preset message, etc.

Exemplarily, the fourth message is an instant messaging message with the third user.

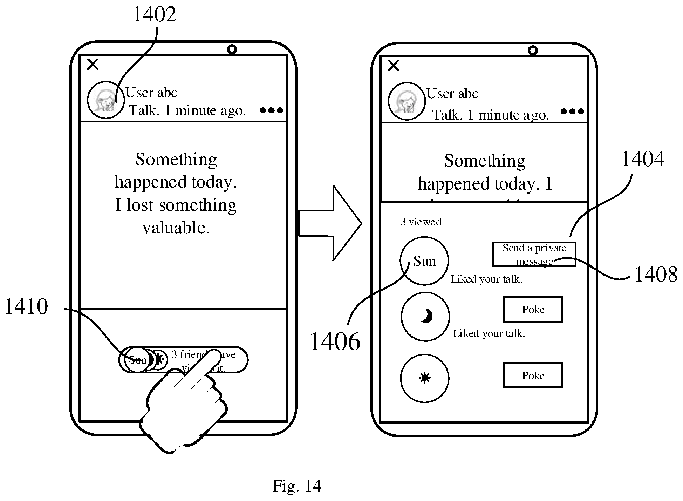

Fig. 14 shows a second schematic diagram of a content display interface provided by some embodiments of the present disclosure. As shown in Fig. 14, a third identification 1402 and a viewing control 1410 are displayed on the content display interface. When the user triggers the viewing control 1410, an information viewing pop-up window 1404 is popped up at the bottom of the content display interface. An avatar icon 1406 of the third user who browses the third message and a fourth input control 1408 are displayed in the information viewing pop-up window 1404. The fourth input control 1408 is in a one-to-one correspondence with the avatar icon 1406 of the third user. The fourth input control 1408 may be triggered to send a preset message to the corresponding third user. After the fourth input control 1408 is triggered, the information viewing pop-up window 1404 is hidden. The information viewing pop-up window 1404 is the third target interface, and the avatar icon 1406 of the third user is the second association information.

Exemplarily, visible time information of the third message is further displayed on the third target interface.

In this embodiment of the present disclosure, the sixth trigger operation is performed on the content display interface, the third target interface may be triggered to be displayed on the content display interface. On the third target interface, the user may view the third association information of the third user who has browsed the third message, and may also conveniently send the fourth message to the third user.

In some embodiments of the present disclosure, the third message includes text content, and a text size of the text content is associated with a number of text characters of the text content.

In this embodiment of the present disclosure, the third message includes the text content. The greater the number of text characters in the text content, the smaller the text size, so that the control size of the third display control is kept within an appropriate range, and the problem that the size of the third display control is too large due to an excessive amount of text content, resulting in occlusion of other display content is avoided.

Exemplarily, the value range of the number of text characters is 15 to 40.

The execution body of the message display method provided by this embodiment of the present disclosure may be a message display apparatus. In this embodiment of the present disclosure, the message display apparatus provided by this embodiment of the present disclosure is described by using an example in which the message display apparatus executes the message display method.

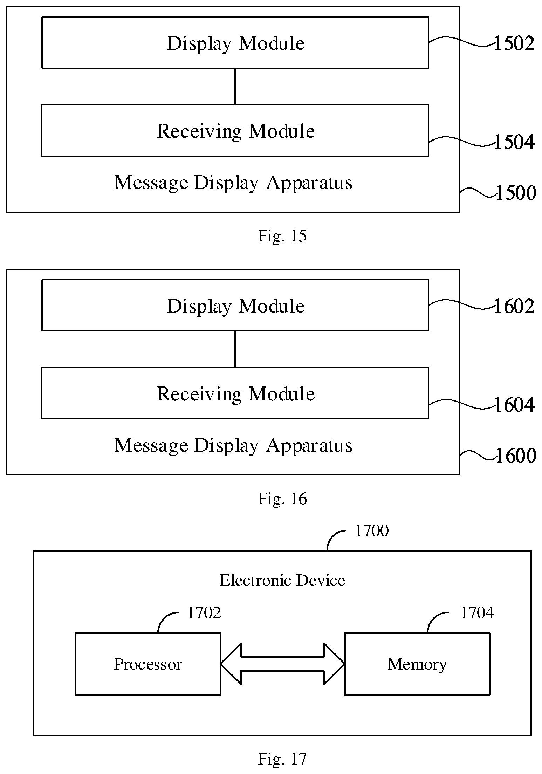

In some embodiments of the present disclosure, a message display apparatus is provided. Fig. 15 shows a first structural block diagram of a message display apparatus provided by an embodiment of the present disclosure. As shown in Fig. 15, the message display apparatus 1500 includes: a display module 1502, configured to display a first identification and a first display control on a message display interface, where the first display control is configured to display a first message, and the first identification includes first association information of a first user who posts the first message; a receiving module 1504, configured to receive a first trigger operation on the first display control or the first identification; and the display module 1502 is further configured to, in response to the first trigger operation, display a content display interface, where the content display interface is configured to display a first media content stream, and the first media content stream includes the first message.

In this embodiment of the present disclosure, the first message sent by the first user may be displayed on the message display interface through the first identification and the corresponding first display control. The user may perform the first trigger operation on the first identification or the first display control to jump to display the content display interface corresponding to the first media content stream. The first message in the first media content stream may be displayed on the content display interface, so that the first message may be displayed not only on the message display interface, but also in the first media content stream on the content display interface, thereby improving the display effect of the first message.

In some embodiments of the present disclosure, the display module 1502 is configured to display the first message on the content display interface; the receiving module 1504 is configured to receive a second trigger operation on the content display interface; and the display module 1502 is further configured to, in response to the second trigger operation, display first media content, where the first media content is media content other than the first message in the first media content stream.

In this embodiment of the present disclosure, the first message may be displayed on the media content interface, and the user may perform the second trigger operation on the media content interface to trigger other media content in the first media content stream, so that the user may switch to view other media content in the first media content stream while viewing the first message on the media content interface.

In some embodiments of the present disclosure, the display module 1502 is configured to display the first association information and first time information on the content display interface, where the first time information is associated with a posting moment of the first message.

In this embodiment of the present disclosure, by displaying the first association information and the first time information on the content display interface, the user may view the user association information of the first user who sends the first message and the sending time information of the first message on the content display interface, so that the user may fully understand the information related to the first message.

In some embodiments of the present disclosure, the message display apparatus further includes: an update module, configured to update the first association information to third association information, and update the first time information to second time information, where the third association information is association information of a second user who posts the first media content, and the second time information is associated with a posting moment of the first media content.

In this embodiment of the present disclosure, the first time information of the first message and the first association information of the first user who posts the first message that are displayed when the first message is displayed on the content display interface. After the user performs the second trigger operation to cause the content display interface to display the updated first media content, the first association information and the first time information on the content display interface are updated to the third association information and the second time information corresponding to the first media content, respectively, thereby realizing timely updating of the information related to the content display interface.

In some embodiments of the present disclosure, the display module 1502 is configured to display a first input control on the content display interface, where the first input control is configured to trigger sending of a second message, and the second message is associated with the first message.

In this implementation of the present disclosure, the first input control is further displayed on the content display interface, and the second message may be conveniently triggered to reply to the first message through the first input control, thereby facilitating the user to reply to the message when browsing the first media content stream.

In some embodiments of the present disclosure, the message display apparatus further includes: a sending module, configured to send the second message to the first user through a target chat interface.

In this embodiment of the present disclosure, the target chat interface is an instant messaging interface with the first user, and the second message is an instant messaging message transmitted through the target chat interface.

In this embodiment of the present disclosure, the second message is sent to the first user as the instant messaging message, thereby realizing that the instant chat interface with the first user may be conveniently switched to for an instant chat when browsing is performed on the content display interface.

In some embodiments of the present disclosure, the receiving module 1504 is configured to receive a third trigger operation on the first identification or the first display control; and the display module 1502 is configured to, in response to the third trigger operation, display a first target interface on the message display interface, where the first target interface includes a second input control, and the second input control is configured to trigger sending of a second message, and the second message is associated with the first message.

In this embodiment of the present disclosure, the first target interface including the second input control is displayed on the content display interface, so that the user may reply to the first message displayed through the second input control, and the operation steps required for the user to reply to the message are further reduced.

In some embodiments of the present disclosure, the first identification includes a first status identification; and the update module is configured to, in a case where the first message is read or the second message associated with the first message is sent, update the first status identification in the first identification.

In this embodiment of the present disclosure, the first status identification is displayed in the first identification, so that the user may view the first status identification to determine the processing status of the first message, and the first status identification is updated in time after the second message associated with the first message is sent, thereby facilitating the user to know the processing status of the first message in real time.

In some embodiments of the present disclosure, the display module 1502 is configured to hide the first display control when a display duration of the first display control reaches a duration threshold.

In this embodiment of the present disclosure, the duration threshold is a preset longest duration that the same first message displayed in the first display control may be displayed. After the display duration of the first display control reaches the duration threshold, it is determined that the first message has expired, and the first display control is hidden, that is, the first message is no longer displayed.

In this embodiment of the present disclosure, the display duration of the first display control is timed, and in the case where the display duration reaches the duration threshold, the display of the first display control is cancelled, thereby avoiding displaying an expired first message for a long time, and making the content display interface more concise.

In some embodiments of the present disclosure, the display module 1502 is configured to display a second identification and a second display control on the content display interface, where the second display control is configured to display the first message; and a display style of the second identification and the second display control matches a display style of the first identification and the first display control.

In this embodiment of the present disclosure, since the first association information and the first message of the first user need to be displayed on the content display interface, the display style of the second identification and the second display control displayed on the content display interface is set to be the same as the display style of the first identification and the second display control displayed on the message display interface, thereby improving the display effect of the first message.

In some embodiments of the present disclosure, a background color of the content display interface matches an identification color of the first identification.

In this embodiment of the present disclosure, the background color of the content display interface is configured according to the identification color of the first identification, so that the background color matches the identification color, the distinguishability of the first messages posted by different first users when viewed on the content display interface is improved, and it is convenient for the user to distinguish the first messages from different sources.

In some embodiments of the present disclosure, a message display apparatus is provided. Fig. 16 shows a second structural block diagram of a message display apparatus provided by an embodiment of the present disclosure. As shown in Fig. 16, the message display apparatus 1600 includes: a display module 1602, configured to display a first identification and a first display control on a message display interface, where the first display control is configured to display a first message, and the first identification includes first association information of a first user who posts the first message; a receiving module 1604, configured to receive a first trigger operation on the first display control or the first identification; and the display module 1602 is further configured to, in response to the first trigger operation, display a content display interface, where the content display interface is configured to display a first media content stream, and the first media content stream includes the first message.

In this embodiment of the present disclosure, the first edit interface is an interface for editing the third message posted by the local end, that is, the local user may edit the third message to be posted in the first edit interface. It should be noted that the third message and the first message are both information in the first media content stream.

In this embodiment of the present disclosure, the third identification and the third display control are displayed on the message display interface, so that the local user may view the third message posted by the local end on the message display interface, and may perform the fourth trigger operation on the message display interface to jump to the first edit interface, thereby further simplifying the operation steps required for the user to edit the third message to be posted.

In some embodiments of the present disclosure, the receiving module 1604 is configured to receive the fourth trigger operation on the third identification or the third display control.

In this embodiment of the present disclosure, the fourth trigger operation may be a touch input to the third identification or the third display control. Exemplarily, the fourth trigger operation may be a click on the third display control, or the fourth trigger operation may be a long press on the third identification.

In this embodiment of the present disclosure, the user may perform the fourth trigger operation on the third identification or the third display control to trigger the display of the first edit interface, so that the user may quickly jump from the message display interface to the first edit interface, thereby improving the convenience for the user to edit the third message.

In some embodiments of the present disclosure, the receiving module 1604 is configured to receive a first sub-trigger operation on the third identification; the display module 1602 is configured to, in response to the first sub-trigger operation, display a second edit interface, where the second edit interface includes a switching control, and the second edit interface is configured to edit media content in a second media content stream; the receiving module 1604 is configured to receive a second sub-trigger operation on the switching control; and the display module 1602 is configured to, in response to the second sub-trigger operation, display the first edit interface.

In this embodiment of the present disclosure, the fourth trigger operation includes the first sub-trigger operation and the second sub-trigger operation. The first sub-trigger operation is used to trigger a jump from the media display interface to the second edit interface. The second edit interface is configured to edit the media content in the second media content stream. The second media content stream is a different media content stream from the first media content stream.

In this embodiment of the present disclosure, the user may display the second edit interface for editing the second media content stream through the first sub-trigger operation. In this case, the second sub-trigger operation may trigger the jump from the second edit interface to the first edit interface. The user may enter the second edit interface through the message display interface to edit the media content in the second media content stream, and may also jump from the second edit interface to display the first edit interface through the switching control, thereby further improving the operation convenience for the user to enter the edit interfaces of different media content streams from the message display interface.

In some embodiments of the present disclosure, the display module 1602 is configured to display a switching control on the first edit interface, where the switching control is configured to trigger switching to display the second edit interface.

In this embodiment of the present disclosure, the switching control is displayed on the first edit interface. The user may trigger switching to display the second edit interface on the first edit interface, so that the user may edit the media content in the second media content stream on the second edit interface.

In this embodiment of the present disclosure, the switching control is displayed on the first edit interface. The user may perform a trigger operation on the switching control to switch from the first edit interface to the second edit interface for editing the second media content stream, thereby further simplifying the operation steps for the user to edit the second media content stream.

In some embodiments of the present disclosure, the display module 1602 is configured to display a fourth identification and a third input control on the first edit interface, where the third input control is configured to trigger editing of the third message in the first media content stream; and a display style of the fourth identification and the third input control matches a display style of the third identification and the third display control.

In this embodiment of the present disclosure, the fourth identification and the third input control are displayed on the first edit interface. The display style of the fourth identification is the same as the display style of the third identification, and the display style of the third input control is the same as the display style of the third display control.

In this embodiment of the present disclosure, since the third association information of the local user and the third message need to be displayed on the first edit interface, the fourth identification and the third input control displayed on the first edit interface are set to be the same as the third identification and the third display control displayed on the message display interface in style, so that the effect of what you see is what you get for the user is achieved, that is, the current posting user may know the display style of the third message on the message display page on the edit page.

In some embodiments of the present disclosure, a background color of the first edit interface matches an identification color of the fourth identification.

In this embodiment of the present disclosure, the background color of the first edit interface matches the identification color of the fourth identification. After the first edit interface is displayed by jumping, color sampling is performed on the fourth identification by a color sampling algorithm, and the background color of the first edit interface is set based on a color sampling result.

In this embodiment of the present disclosure, the background color of the first edit interface is configured according to the identification color of the fourth identification, so that the background color matches the identification color, the distinguishability of the first messages posted by different local users when viewed on the first edit interface is improved, and it is convenient for the user to distinguish the first messages from different sources.

In some embodiments of the present disclosure, the receiving module 1604 is configured to receive a fifth trigger operation on the third identification; and the display module 1602 is configured to, in response to the fifth trigger operation, display a second target interface on the message display interface, where the second target interface includes a deletion control and an update control, the deletion control is configured to delete the third message, and the update control is configured to update the third message.

In this embodiment of the present disclosure, the fifth trigger operation is used to trigger the display of the second target interface on the message display interface. The deletion control for deleting the third message and the update control for updating the third message are displayed on the second target interface. The posted third message may be deleted through the deletion control, and the posted third message may be updated through the update control. The user may conveniently delete or update the third message through the message display interface.

In this embodiment of the present disclosure, the second target interface including the update control and the deletion control is displayed on the content display interface, so that the user may conveniently delete or update the posted third message through the deletion control and the update control, and the operation steps required for the user to perform deletion or update processing on the posted third message are further reduced.

In some embodiments of the present disclosure, the receiving module 1604 is configured to receive a sixth trigger operation on the content display interface; and the display module 1602 is configured to, in response to the sixth trigger operation, display a third target interface on the content display interface, where the third target interface includes second association information and/or a fourth input control, the second association information is association information of a third user who browses the third message, and the fourth input control is configured to send a fourth message to the third user.

In this embodiment of the present disclosure, the sixth trigger operation is used to trigger the display of the third target interface on the content display interface, and the third target interface is used to display the second association information of the third user who has browsed the third message.

In this embodiment of the present disclosure, the fourth input control is further displayed on the third target interface. By triggering a trigger operation on the fourth input control, the fourth message may be triggered to be sent to the third user. The fourth message may be a greeting message, a preset message, etc.

In this embodiment of the present disclosure, the sixth trigger operation is performed on the content display interface, the third target interface may be triggered to be displayed on the content display interface. On the third target interface, the user may view the third association information of the third user who has browsed the third message, and may also conveniently send the fourth message to the third user.

In some embodiments of the present disclosure, the third message includes text content, and a text size of the text content is associated with a number of text characters of the text content.

In this embodiment of the present disclosure, the third message includes the text content. The greater the number of text characters in the text content, the smaller the text size, so that the control size of the third display control is kept within an appropriate range, and the problem that the size of the third display control is too large due to an excessive amount of text content, resulting in occlusion of other display content is avoided.

The message display apparatus in this embodiment of the present disclosure may be an electronic device, or a component in an electronic device, such as an integrated circuit or a chip. The electronic device may be a terminal or other device than a terminal. Exemplarily, the electronic device may be a mobile phone, a tablet computer, a notebook computer, a palmtop computer, a vehicle-mounted electronic device, a mobile Internet device (MID), an augmented reality (AR)/virtual reality (VR) device, a robot, a wearable device, an ultra-mobile personal computer (UMPC), a netbook, or a personal digital assistant (PDA), and may also be a server, a network attached storage (NAS), a personal computer (PC), a television (TV), a teller machine, or a self-service machine, which is not specifically limited in this embodiment of the present disclosure.

The message display apparatus in this embodiment of the present disclosure may be an apparatus having an operating system. The operating system may be an Android operating system, an iOS operating system, or other possible operating systems, which is not specifically limited in this embodiment of the present disclosure.

The message display apparatus provided by this embodiment of the present disclosure may implement various processes implemented by the above method embodiments. To avoid repetitions, details are not described herein again.

Optionally, an embodiment of the present disclosure further provides an electronic device. Fig. 17 shows a structural block diagram of an electronic device provided by some embodiments of the present disclosure. As shown in Fig. 17, the electronic device 1700 includes a processor 1702 and a memory 1704. A program or instructions are stored on the memory 1704 and executable on the processor 1702. The program or instructions, when executed by the processor 1702, implement the steps of the above method embodiments, and the same technical effects may be achieved. To avoid repetitions, details are not described herein again.

It should be noted that the electronic device in this embodiment of the present disclosure includes the above mobile electronic device and non-mobile electronic device.

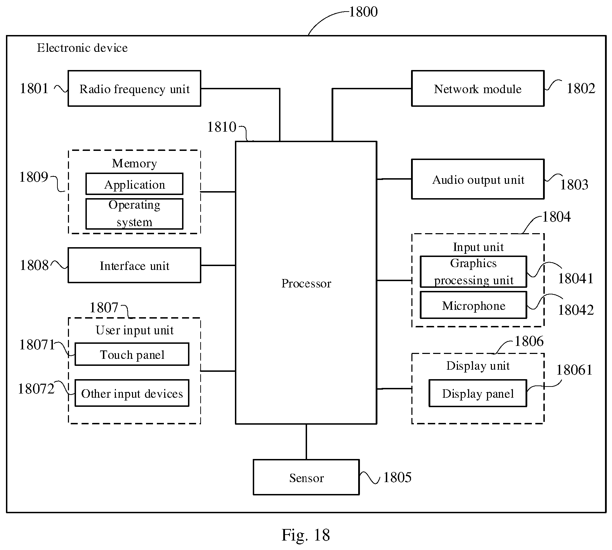

Fig. 18 shows a schematic diagram of a hardware structure of an electronic device provided by some embodiments of the present disclosure.

The electronic device 1800 includes, but is not limited to, a radio frequency unit 1801, a network module 1802, an audio output unit 1803, an input unit 1804, a sensor 1805, a display unit 1806, a user input unit 1807, an interface unit 1808, a memory 1809, a processor 1810, and other components.

A person skilled in the art may understand that the electronic device 1800 may further include a power source (such as a battery) for supplying power to the components. The power source may be logically connected to the processor 1810 through a power management system, so that functions such as charging management, discharging management, and power consumption management may be implemented through the power management system. The structure of the electronic device shown in Fig. 18 does not constitute a limitation on the electronic device. The electronic device may include more or fewer components than those shown in the figure, or combine some components, or have different component arrangements, which will not be described in detail herein.

The display unit 1806 is configured to display a first identification and a first display control on a message display interface, where the first display control is configured to display a first message, and the first identification includes first association information of a first user who posts the first message.

The user input unit 1807 is configured to receive a first trigger operation on the first display control or the first identification.

The display unit 1806 is configured to, in response to the first trigger operation, display a content display interface, where the content display interface is configured to display a first media content stream, and the first media content stream includes the first message.

In this embodiment of the present disclosure, the first message sent by the first user may be displayed on the message display interface through the first identification and the corresponding first display control. The user may perform the first trigger operation on the first identification or the first display control to jump to display the content display interface corresponding to the first media content stream. The first message in the first media content stream may be displayed on the content display interface, so that the first message may be displayed not only on the message display interface, but also in the first media content stream on the content display interface, thereby improving the display effect of the first message.

Further, the display unit 1806 is configured to display the first message on the content display interface; the user input unit 1807 is configured to receive a second trigger operation on the content display interface; and the display unit 1806 is configured to, in response to the second trigger operation, display first media content, where the first media content is media content other than the first message in the first media content stream.

In this embodiment of the present disclosure, the first message may be displayed on the media content interface, and the user may perform the second trigger operation on the media content interface to trigger other media content in the first media content stream, so that the user may switch to view other media content in the first media content stream while viewing the first message on the media content interface.

Further, the display unit 1806 is configured to display the first association information and first time information on the content display interface, where the first time information is associated with a posting moment of the first message.

In this embodiment of the present disclosure, by displaying the first association information and the first time information on the content display interface, the user may view the user association information of the first user who sends the first message and the sending time information of the first message on the content display interface, so that the user may fully understand the information related to the first message.

Further, the processor 1810 is configured to update the first association information to third association information, and update the first time information to second time information, where the third association information is association information of a second user who posts the first media content, and the second time information is associated with a posting moment of the first media content.

In this embodiment of the present disclosure, the first time information of the first message and the first association information of the first user who posts the first message that are displayed when the first message is displayed on the content display interface. After the user performs the second trigger operation to cause the content display interface to display the updated first media content, the first association information and the first time information on the content display interface are updated to the third association information and the second time information corresponding to the first media content, respectively, thereby realizing timely updating of the information related to the content display interface.

Further, the display unit 1806 is configured to display a first input control on the content display interface, where the first input control is configured to trigger sending of a second message, and the second message is associated with the first message.

In this implementation of the present disclosure, the first input control is further displayed on the content display interface, and the second message may be conveniently triggered to reply to the first message through the first input control, thereby facilitating the user to reply to the message when browsing the first media content stream.

Further, the processor 1810 is configured to send the second message to the first user through a target chat interface.

In this embodiment of the present disclosure, the target chat interface is an instant messaging interface with the first user, and the second message is an instant messaging message transmitted through the target chat interface.

In this embodiment of the present disclosure, the second message is sent to the first user as the instant messaging message, thereby realizing that the instant chat interface with the first user may be conveniently switched to for an instant chat when browsing is performed on the content display interface.

Further, the user input unit 1807 is configured to receive a third trigger operation on the first identification or the first display control; and

the display unit 1806 is configured to, in response to the third trigger operation, display a first target interface on the message display interface, where the first target interface includes a second input control, and the second input control is configured to trigger sending of a second message, and the second message is associated with the first message.

In this embodiment of the present disclosure, the first target interface including the second input control is displayed on the content display interface, so that the user may reply to the first message displayed through the second input control, and the operation steps required for the user to reply to the message are further reduced.

Further, the first identification includes a first status identification; and the processor 1810 is configured to, in a case where the first message is read or the second message associated with the first message is sent, update the first status identification in the first identification.

In this embodiment of the present disclosure, the first status identification is displayed in the first identification, so that the user may view the first status identification to determine the processing status of the first message, and the first status identification is updated in time after the second message associated with the first message is sent, thereby facilitating the user to know the processing status of the first message in real time.

Further, the display unit 1806 is configured to hide the first display control when a display duration of the first display control reaches a duration threshold.

In this embodiment of the present disclosure, the duration threshold is a preset longest duration that the same first message displayed in the first display control may be displayed. After the display duration of the first display control reaches the duration threshold, it is determined that the first message has expired, and the first display control is hidden, that is, the first message is no longer displayed.

In this embodiment of the present disclosure, the display duration of the first display control is timed, and in the case where the display duration reaches the duration threshold, the display of the first display control is cancelled, thereby avoiding displaying an expired first message for a long time, and making the content display interface more concise.

In a further embodiment, the display unit 1806 is configured to display a second identification and a second display control on the content display interface, where the second display control is configured to display the first message; and a display style of the second identification and the second display control matches a display style of the first identification and the first display control.

In this embodiment of the present disclosure, since the first association information and the first message of the first user need to be displayed on the content display interface, the display style of the second identification and the second display control displayed on the content display interface is set to be the same as the display style of the first identification and the second display control displayed on the message display interface, thereby improving the display effect of the first message.

Further, a background color of the content display interface matches an identification color of the first identification.

In this embodiment of the present disclosure, the background color of the content display interface is configured according to the identification color of the first identification, so that the background color matches the identification color, the distinguishability of the first messages posted by different first users when viewed on the content display interface is improved, and it is convenient for the user to distinguish the first messages from different sources.

Further, the display unit 1806 is configured to display a first identification and a first display control on a message display interface, where the first display control is configured to display a first message, and the first identification includes first association information of a first user who posts the first message; the user input unit 1807 is configured to receive a first trigger operation on the first display control or the first identification; and the display unit 1806 is configured to, in response to the first trigger operation, display a content display interface, where the content display interface is configured to display a first media content stream, and the first media content stream includes the first message.

In this embodiment of the present disclosure, the first edit interface is an interface for editing the third message posted by the local end, that is, the local user may edit the third message to be posted in the first edit interface. It should be noted that the third message and the first message are both information in the first media content stream.

In this embodiment of the present disclosure, the third identification and the third display control are displayed on the message display interface, so that the local user may view the third message posted by the local end on the message display interface, and may perform the fourth trigger operation on the message display interface to jump to the first edit interface, thereby further simplifying the operation steps required for the user to edit the third message to be posted.

Further, the user input unit 1807 is configured to receive the fourth trigger operation on the third identification or the third display control.

In this embodiment of the present disclosure, the fourth trigger operation may be a touch input to the third identification or the third display control. Exemplarily, the fourth trigger operation may be a click on the third display control, or the fourth trigger operation may be a long press on the third identification.

In this embodiment of the present disclosure, the user may perform the fourth trigger operation on the third identification or the third display control to trigger the display of the first edit interface, so that the user may quickly jump from the message display interface to the first edit interface, thereby improving the convenience for the user to edit the third message.

Further, the user input unit 1807 is configured to receive a first sub-trigger operation on the third identification; the display unit 1806 is configured to, in response to the first sub-trigger operation, display a second edit interface, where the second edit interface includes a switching control, and the second edit interface is configured to edit media content in a second media content stream; the user input unit 1807 is configured to receive a second sub-trigger operation on the switching control; and the display unit 1806 is configured to, in response to the second sub-trigger operation, display the first edit interface.

In this embodiment of the present disclosure, the fourth trigger operation includes the first sub-trigger operation and the second sub-trigger operation. The first sub-trigger operation is used to trigger a jump from the media display interface to the second edit interface. The second edit interface is configured to edit the media content in the second media content stream. The second media content stream is a different media content stream from the first media content stream.

In this embodiment of the present disclosure, the user may display the second edit interface for editing the second media content stream through the first sub-trigger operation. At this time, the second sub-trigger operation may trigger a jump from the second edit interface to the first edit interface. The user may enter the second edit interface through the message display interface to edit the media content in the second media content stream, and may also jump to display the first edit interface through the switching control on the second edit interface, thereby further improving the operation convenience for the user to enter the edit interfaces of different media content streams from the message display interface.

Further, the display unit 1806 is configured to display a switching control on the first edit interface, where the switching control is configured to trigger switching to display the second edit interface.

In this embodiment of the present disclosure, the switching control is displayed on the first edit interface. The user may trigger switching to display the second edit interface on the first edit interface, so that the user may edit the media content in the second media content stream on the second edit interface.

In this embodiment of the present disclosure, the switching control is displayed on the first edit interface. The user may perform a trigger operation on the switching control to switch from the first edit interface to the second edit interface for editing the second media content stream, thereby further simplifying the operation steps for the user to edit the second media content stream.

Further, the display unit 1806 is configured to display a fourth identification and a third input control on the first edit interface, where the third input control is configured to trigger editing of the third message in the first media content stream; and a display style of the fourth identification and the third input control matches a display style of the third identification and the third display control.

In this embodiment of the present disclosure, the fourth identification and the third input control are displayed on the first edit interface. The display style of the fourth identification is the same as the display style of the third identification, and the display style of the third input control is the same as the display style of the third display control.

In this embodiment of the present disclosure, since the third association information of the local user and the third message need to be displayed on the first edit interface, the fourth identification and the third input control displayed on the first edit interface are set to be the same as the third identification and the third display control displayed on the message display interface in style, so that the effect of what you see is what you get for the user is achieved, that is, the current posting user may know the display style of the third message on the message display page on the edit page.

Further, a background color of the first edit interface matches an identification color of the fourth identification.

In this embodiment of the present disclosure, the background color of the first edit interface matches the identification color of the fourth identification. After the first edit interface is displayed by jumping, color sampling is performed on the fourth identification by a color sampling algorithm, and the background color of the first edit interface is set based on a color sampling result.

In this embodiment of the present disclosure, the background color of the first edit interface is configured according to the identification color of the fourth identification, so that the background color matches the identification color, the distinguishability of the first messages posted by different local users when viewed on the first edit interface is improved, and it is convenient for the user to distinguish the first messages from different sources.

Further, the user input unit 1807 is configured to receive a fifth trigger operation on the third identification; and the display unit 1806 is configured to, in response to the fifth trigger operation, display a second target interface on the message display interface, where the second target interface includes a deletion control and an update control, the deletion control is configured to delete the third message, and the update control is configured to update the third message.

In this embodiment of the present disclosure, the fifth trigger operation is used to trigger the display of the second target interface on the message display interface. The deletion control for deleting the third message and the update control for updating the third message are displayed on the second target interface. The posted third message may be deleted through the deletion control, and the posted third message may be updated through the update control. The user may conveniently delete or update the third message through the message display interface.

In this embodiment of the present disclosure, the second target interface including the update control and the deletion control is displayed on the content display interface, so that the user may conveniently delete or update the posted third message through the deletion control and the update control, and the operation steps required for the user to perform deletion or update processing on the posted third message are further reduced.

Further, the user input unit 1807 is configured to receive a sixth trigger operation on the content display interface; and the display unit 1806 is configured to, in response to the sixth trigger operation, display a third target interface on the content display interface, where the third target interface includes second association information and/or a fourth input control, the second association information is association information of a third user who browses the third message, and the fourth input control is configured to send a fourth message to the third user.

In this embodiment of the present disclosure, the sixth trigger operation is used to trigger the display of the third target interface on the content display interface, and the third target interface is used to display the second association information of the third user who has browsed the third message.

In this embodiment of the present disclosure, the fourth input control is further displayed on the third target interface. By triggering a trigger operation on the fourth input control, the fourth message may be triggered to be sent to the third user. The fourth message may be a greeting message, a preset message, etc.

In this embodiment of the present disclosure, the sixth trigger operation is performed on the content display interface, the third target interface may be triggered to be displayed on the content display interface. On the third target interface, the user may view the third association information of the third user who has browsed the third message, and may also conveniently send the fourth message to the third user.

In a further embodiment, the third message includes text content, and a text size of the text content is associated with a number of text characters of the text content.

In this embodiment of the present disclosure, the third message includes the text content. The greater the number of text characters in the text content, the smaller the text size, so that the control size of the third display control is kept within an appropriate range, and the problem that the size of the third display control is too large due to an excessive amount of text content, resulting in occlusion of other display content is avoided.

It should be understood that in this embodiment of the present disclosure, the input unit 1804 may include a graphics processing unit (GPU) 18041 and a microphone 18042. The graphics processing unit 18041 processes image data of a still picture or a video obtained by an image capturing apparatus (such as a camera) in a video capturing mode or an image capturing mode. The display unit 1806 may include a display panel 18061, and the display panel 18061 may be configured in the form of a liquid crystal display, an organic light emitting diode, etc. The user input unit 1807 includes at least one of a touch panel 18071 and other input devices 18072. The touch panel 18071 is also referred to as a touch screen. The touch panel 18071 may include two parts: a touch detection apparatus and a touch controller. The other input devices 18072 may include, but are not limited to, a physical keyboard, a function button (such as a volume control button, a switch button, etc.), a trackball, a mouse, and a joystick, which will not be described in detail herein.

The memory 1809 may be used to store software programs and various data. The memory 1809 may mainly include a first storage area for storing programs or instructions and a second storage area for storing data. The first storage area may store an operating system, an application program or instructions required for at least one function (such as a sound playback function, an image playback function, etc.), etc. In addition, the memory 1809 may include a volatile memory or a non-volatile memory, or the memory 1809 may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct rambus random access memory (DRRAM). The memory 1809 in this embodiment of the present disclosure includes, but is not limited to, these and any other suitable types of memories.

The processor 1810 may include one or more processing units. Optionally, the processor 1810 integrates an application processor and a modulation and demodulation processor. The application processor mainly processes operations involving an operating system, a user interface, an application program, etc., and the modulation and demodulation processor mainly processes wireless communication signals, such as a baseband processor. It should be understood that the above modulation and demodulation processor may not be integrated into the processor 1810.

An embodiment of the present disclosure further provides a readable storage medium. A program or instructions are stored on the readable storage medium. The program or instructions, when executed by a processor, implement the steps of the above message display method embodiments, and the same technical effects may be achieved. To avoid repetitions, details are not described herein again.

The processor is the processor in the electronic device in the above embodiments. The readable storage medium includes a computer-readable storage medium, such as a computer read-only memory (ROM), a random access memory (RAM), a magnetic disk, or an optical disc.

An embodiment of the present disclosure further provides a chip. The chip includes a processor and a communication interface. The communication interface is coupled with the processor. The processor is configured to run a program or instructions to implement the steps of the above message display method embodiments, and the same technical effects may be achieved. To avoid repetitions, details are not described herein again.

It should be understood that the chip mentioned in this embodiment of the present disclosure may also be referred to as a system-on-chip, a system chip, a chip system, or a system-on-chip.

An embodiment of the present disclosure provides a computer program product. The program product is stored in a storage medium. The program product is executed by at least one processor to implement the steps of the above message display method embodiments, and the same technical effects may be achieved. To avoid repetitions, details are not described herein again.

It should be noted that in this specification, the terms "include", "include", or any other variant thereof are intended to cover non-exclusive inclusion, so that a process, method, object, or apparatus including a list of elements includes not only those elements, but also other elements not explicitly listed or elements inherent to such a process, method, object, or apparatus. Without further restrictions, an element defined by the phrase "includes a" does not exclude the existence of additional identical elements in the process, method, object, or apparatus that includes the element. In addition, it should be pointed out that the scope of the method and apparatus in the embodiments of the present disclosure is not limited to performing functions in the order shown or discussed, and may further include performing functions in a substantially simultaneous manner or in the reverse order according to the functions involved. For example, the described method may be performed in an order different from that described, and various steps may be added, omitted, or combined. In addition, the features described with reference to some examples may be combined in other examples.

Through the above description of the implementations, a person skilled in the art may clearly understand that the method in the above embodiments may be implemented by software and a necessary general-purpose hardware platform, and certainly may also be implemented by hardware, but in many cases, the former is a better implementation. Based on such understanding, the technical solutions of the present disclosure may be embodied in the form of a computer software product. The computer software product is stored in a storage medium (such as a ROM/RAM, a magnetic disk, or an optical disc) and includes a number of instructions for enabling a terminal (which may be a mobile phone, a computer, a server, a network device, etc.) to perform the method in each embodiment of the present disclosure.

The embodiments of the present disclosure have been described above with reference to the drawings, but the present disclosure is not limited to the above specific implementations. The above specific implementations are merely illustrative and not restrictive. Under the enlightenment of the present disclosure, a person of ordinary skill in the art may make many forms without departing from the spirit of the present disclosure and the scope of protection of the claims, and these forms shall fall within the protection scope of the present disclosure.

## Claims

1. A message display method, comprising:
displaying a first identification and a first display control on a message display interface, wherein the first display control is configured to display a first message, and the first identification comprises first association information of a first user who posts the first message;
receiving a first trigger operation on the first display control or the first identification; and
displaying a content display interface in response to the first trigger operation, wherein the content display interface is configured to display a first media content stream, and the first media content stream comprises the first message.

2. The message display method of claim 1, wherein the displaying a content display interface in response to the first trigger operation comprises:
displaying the first message in the content display interface;
receiving a second trigger operation on the content display interface; and
displaying first media content in response to the second trigger operation, wherein the first media content is media content other than the first message in the first media content stream.

3. The message display method of claim 2, wherein the displaying a content display interface in response to the first trigger operation comprises:
displaying the association information and first time information in the content display interface, wherein the first time information is associated with a posting moment of the first message.

4. The message display method of claim 3, wherein displaying the first media content comprises:
updating the first association information to second association information, and updating the first time information to second time information, wherein the second association information is association information of a second user who posts the first media content, and the second time information is associated with a posting moment of the first media content.

5. The message display method of claim 1, wherein displaying the content display interface comprises:
displaying a first input control in the content display interface, wherein the first input control is configured to trigger sending of a second message, and the second message is associated with the first message.

6. The message display method of claim 5, further comprising:
sending the second message in response to a trigger on the first input control; and
sending the second message to the first user based on a chat interface.

7. The message display method of claim 1, further comprising:
receiving a third trigger operation on the first identification or the first display control; and
in response to the third trigger operation, displaying a first target interface on the message display interface, wherein the first target interface comprises a second input control, and the second input control is configured to trigger sending of a second message, and the second message is associated with the first message.

8. The message display method of any of claims 5 to 7, wherein the first identification comprises a first status identification; and
when the first message is read or the second message associated with the first message is sent, updating the first status identification in the first identification.

9. The message display method of any of claims 1 to 8, further comprising:
hiding the first display control when a display duration of the first display control reaches a duration threshold.

10. The message display method of any of claims 1 to 9, wherein a second identification and a second display control are displayed on the content display interface, and the second display control is configured to display the first message; and
a display style of the second identification and the second display control matches a display style of the first identification and the first display control.

11. The message display method of any of claims 1 to 10, wherein a background color of the content display interface matches an identification color of the first identification.

12. A message display method, comprising:
displaying a third identification and a third display control on a message display interface, wherein the third display control is configured to display a third message posted in a first media content stream;
receiving a fourth trigger operation; and
displaying a first edit interface in response to the fourth trigger operation, wherein the first edit interface is configured to edit the third message in the first media content stream.

13. The message display method of claim 12, wherein receiving the fourth trigger operation comprises:
receiving the fourth trigger operation on the third identification or the third display control.

14. The message display method of claim 12, wherein receiving the fourth trigger operation comprises:
receiving a first sub-trigger operation on the third identification;
displaying a second edit interface in response to the first sub-trigger operation, wherein the second edit interface comprises a switching control, and the second edit interface is configured to edit media content in a second media content stream;
receiving a second sub-trigger operation on the switching control; and
displaying the first edit interface in response to the fourth trigger operation comprises:
displaying the first edit interface in response to the second sub-trigger operation.

15. The message display method of any of claims 12 to 14, further comprising:
displaying a switching control on the first edit interface, wherein the switching control is configured to trigger switching to display a second edit interface.

16. The message display method of any of claims 12 to 15, wherein displaying the first edit interface in response to the fourth trigger operation comprises:
displaying a fourth identification and a third input control on the first edit interface, wherein the third input control is configured to trigger editing of the third message in the first media content stream,
wherein a display style of the fourth identification and the third input control matches a display style of the third identification and the third display control.

17. The message display method of claim 16, wherein a background color of the first edit interface matches an identification color of the fourth identification.

18. The message display method of any of claims 12 to 17, wherein after displaying the third identification and the third display control on the message display interface, the message display method further comprises:
receiving a fifth trigger operation on the third identification; and
displaying a second target interface on the message display interface in response to the fifth trigger operation, wherein the second target interface comprises a deletion control and an update control, the deletion control is configured to delete the third message, and the update control is configured to update the third message.

19. The message display method of any of claims 12 to 18, further comprising:
receiving a sixth trigger operation on a content display interface; and
displaying a third target interface on the content display interface in response to the sixth trigger operation, wherein the third target interface comprises second association information and/or a fourth input control, the second association information is association information of a third user who views the third message, and the fourth input control is configured to send a fourth message to the third user.

20. The message display method of any of claims 12 to 19, wherein the third message comprises text content; and
a text size of the text content is associated with a count of text characters of the text content.

21. A message display apparatus, comprising:
a display module, configured to display a first identification and a first display control on a message display interface, wherein the first display control is configured to display a first message, and the first identification comprises first association information of a first user who posts the first message;
a receiving module, configured to receive a first trigger operation on the first display control or the first identification; and
the display module is further configured to, in response to the first trigger operation, display a content display interface, wherein the content display interface is configured to display a first media content stream, and the first media content stream comprises the first message.

22. A message display apparatus, comprising:
a display module, configured to display a third identification and a third display control on a message display interface, wherein the third display control is configured to display a third message posted in a first media content stream;
a receiving module, configured to receive a fourth trigger operation; and
the display module is further configured to, in response to the fourth trigger operation, display a first edit interface, wherein the first edit interface is configured to edit the third message in the first media content stream.

23. An electronic device, comprising a processor and a memory, wherein the memory stores a program or instructions executable on the processor, and when the program or instructions are executed by the processor, the message display method of any one of claims 1 to 20 is implemented.

24. A readable storage medium, wherein a program or instructions are stored on the readable storage medium, and when the program or instructions are executed by a processor, the message display method of any of claims 1 to 20 is implemented.
